# EUROPÄISCHE PATENTANMELDUNG

(11) **EP 1 832 494 A2**
(43) Veröffentlichungstag der Anmeldung: **12.09.2007**
(21) Anmeldenummer: 07103699.0
(22) Anmeldetag: 07.03.2007
(51) Int. Cl.: B62B 13/04

(54) **Sportgerät**

(30) Priorität: 08.03.2006 DE 102006011114; 07.04.2006 DE 102006016532
(71) Anmelder: GEIGER TECHNIK GmbH, 82467 Garmisch-Partenkirchen (DE)
(72) Erfinder: Bauderer, Michael, 82497 Unterammergau (DE); Seibold, Paul, 82491 Grainau (DE); Sick, Hans-Hermann, 82467 Garmisch-Partenkirchen (DE); Altenhofen, Peter, 82496 Oberau (DE); Hegelein, Matthias, 82438 Eschenlohe (DE)
(74) Vertreter: Lang, Christian

(57) **Zusammenfassung**

Die vorliegende Erfindung betrifft ein Objektiv und ein Verfahren zum Betreiben eines Objektivs, insbesondere eines Projektions- oder Beleuchtungsobjektivs für die Mikrolithografie zur Abbildung eines Retikels auf einen Wafer, mit einer Mehrzahl von optischen Elementen, die entlang eines Strahlengangs angeordnet sind, wobei mindestens ein optisches Element erster Art vorgesehen ist, welches von einem Strahlenbündel nur teilweise bestrahlt wird, wobei das oder mehrere optische Elemente erster Art um die oder parallel zur optischen Achse drehbar gelagert oder positionierbar sind, wobei für jedes optische Element erster Art mindestens zwei, vorzugsweise mehrere Lagerpositionen vorgesehen sind und wobei der Drehwinkel zwischen zwei Lagerpositionen durch die durch das Strahlenbündel bestrahlte Fläche (7) derart definiert ist, dass in den verschiedenen Lagerpositionen die von dem Strahlenbündel bestrahlten Flächen nicht überlappen.

## Beschreibung

### HINTERGRUND DER ERFINDUNG

### GEBIET DER ERFINDUNG

Die vorliegende Erfindung betrifft ein Sportgerät nach den Oberbegriffen der Ansprüche 1 und 7.

### STAND DER TECHNIK

Aus dem Stand der Technik sind eine Vielzahl von Schlitten oder Bobs bekannt, die zum Befahren von schneebedeckten Hängen oder Wegen dienen und geeignet sind. Die Erfindung geht hierbei aus von einem sog. Minibob oder auch Zipfelbob bzw. Zipflbob genannt, welcher sich durch eine charakteristische Form auszeichnet. Allerdings ist die Erfindung auch mit anderen ähnlichen Sportgeräten verwirklichbar.

Der bekannte Minibob weist einen Kunststoffhohlkörper auf, der eine im Wesentlichen rechteckförmige Grundfläche mit abgerundeten Ecken sowie eine s- oder wellenförmige Oberseite umfasst, die eine Sitzfläche und eine konvex gewölbte, erhöhte Beinauflagefläche aufweist. In dem erhöhten Bereich der Beinauflagefläche ist mittig ein Halte- und Steuergriff vorgesehen, der im Wesentlichen senkrecht aus der Beinauflagefläche bzw. Oberseite hervorsteht und sowohl zum Festhalten auf dem Minibob als auch zum Steuern desselben verwendet wird.

Für derartige Minibobs oder Zipfelbobs werden aufgrund der hervorragenden Fahreigenschaften zwischenzeitlich bereits Rennserien organisiert, so dass sich ein regelrechter Wettkampsport auf Grundlage dieses Sportgeräts entwickelt hat.

Entsprechend sind auch schon Bestrebungen unternommen worden, die Eigenschaften eines derartigen Minibobs für Rennzwecke zu verbessern. So ist in der DE 20 2004 006 338 U1 ein Bob, insbesondere Minibob beschrieben, welcher auf einem Teil der Rutschfläche einen Rennbelag aufweist. Dieser Rennbelag ist fest mit der Unterseite des Minibobs verklebt oder verschweißt und ist aus einem üblichen Kunststoffskibelag aus Polyethylen gebildet.

### OFFENBARUNG DER ERFINDUNG

### AUFGABE DER ERFINDUNG

Es ist Aufgabe der vorliegenden Erfindung, den oben genannten Minibob bzw. allgemein ein Sportgerät zur gleitenden Bewegung auf Schnee, Eis, Wasser, Sand oder sonstigen künstlichen oder natürlichen Gleitflächen, die mit einem entsprechenden Minibob vergleichbar sind, derart weiterzubilden, dass die Gebrauchseigenschaften deutlich verbessert werden und zwar hinsichtlich der Fahreigenschaften, der variablen Einsatzmöglichkeiten, der verbesserten Sicherheit, der besseren Handhabung und dergleichen. Dies soll bei einer gleichzeitigen einfachen Herstellbarkeit erreicht werden.

### LÖSUNG DER ERFINDUNG

Diese Aufgabe wird gelöst mit einem Sportgerät mit den Merkmalen der Ansprüche 1 und 7. Vorteilhafte Ausgestaltungen sind Gegenstand der abhängigen Ansprüche.

Nach einem ersten Aspekt der vorliegenden Erfindung wird die variable Einsatzfähigkeit des Sportgeräts dadurch erhöht, dass an dem Grundkörper des Sportgeräts, welcher den Gleitboden, die Sitzfläche und die Beinauflagefläche umfasst, Kopplungselemente zum schnellen Wechseln von Komponenten, wie beispielsweise dem Halte- und Steuergriff, und/oder zusätzlichen Anbauteilen vorgesehen sind. Aufgrund dieser Kopplungsmöglichkeiten kann das Sportgerät modulartig ausgehend von einer Basisversion an unterschiedlichste Einsatzbedingungen und Einsatzzwecke angepasst werden, indem entsprechende Komponenten getauscht oder zusätzliche Anbauteile vorgesehen werden.

Die Kopplungselemente umfassen grundsätzlich alle möglichen Elemente, die ein Befestigen von Komponenten und/oder Anbauteilen in lösbarer Form ermöglichen. Dazu gehören z.B. Gewindebuchsen und/oder Gewindestutzen zur Herstellung von Schraubverbindungen, Klemmelemente, formschlüssige Verbindungen, insbesondere formschlüssige Rastverbindungen, wie Clipsverbindungen, Klettverschlüsse oder dergleichen. Insbesondere Gewindebuchsen und Gewindestutzen sowie formschlüssige Verbindungen mit Verriegelungszapfen und - bolzen oder dergleichen oder entsprechenden Steckverbindungen ermöglichen ein einfaches und schnelles Wechseln von Komponenten und/oder Anbauteilen bei gleichzeitig sicherer und fester Verbindung.

Die Kopplungselemente können als einstückige integrale Teile des Grundkörpers ausgebildet sein, wie beispielsweise in Kunststoff-Spritzguss ausgebildete Gewinde oder als separate Bauteile form-, kraft- oder stoffschlüssig am Grundkörper vorgesehen sein. Insbesondere ist es möglich entsprechende Kopplungselemente beim Herstellen des Grundkörpers, z.B. durch Kunststoff-Spritzguss mit einzugießen oder zu integrieren.

Die auswechselbaren Komponenten und/oder Anbauteile umfassen insbesondere Bremshilfen, wie Fahrbremsen und/oder Haltebremsen, Halte- und Steuergriffe, Sitzelemente, Traghilfen, Laufflächen, Kufen, Fanghilfen und/oder Zughilfen.

Insbesondere durch die Lösbarkeit bzw. Auswechselbarkeit des Halte- und Steuergriffs ist ein platzsparender Transport und eine einfachere Handhabbarkeit gegeben.

Nach einem weiteren Aspekt der vorliegenden Erfindung, für den selbstständig und in Kombination mit dem vorangegangenen Aspekt Schutz begehrt wird, ist der Halte- und Steuergriff mit einer Sollbruchstelle versehen. Die Sollbruchstelle, die insbesondere im Bereich der Beinauflagefläche vorgesehen ist, dient dazu, dass der aus der Beinauflagefläche hervorstehende Halte- und Steuergriff beim Überschreiten einer bestimmten Grenzlast abbricht, um das Verletzungsrisiko zu minimieren. Durch das nahezu senkrechte Hervorstehen des Halte- und Steuergriffs aus der Beinauflagefläche ist die Gefahr einer Verletzung an dieser Komponente des Sportgeräts besonders groß, so dass durch eine definierte Entfernung des hervorstehenden Teils mittels einer Sollbruchstelle im Überlast-Fall das Verletzungsrisiko stark reduziert werden kann.

Nach einem dritten Aspekt, der ebenfalls in Kombination mit den übrigen Aspekten der vorliegenden Erfindung als auch eigenständig Schutz beansprucht, ist der Halte- und Steuergriff klappbar und/oder im Grundkörper versenkbar ausgebildet.

Mit dieser Maßnahme wird erreicht, dass der Platzbedarf für den Transport und die Lagerung des Sportgeräts aufgrund des hervorstehenden Halte- und Steuergriffs ebenfalls verringert wird, da der Halte- und Steuergriff während des Transports oder der Lagerung weggeklappt oder im Grundkörper versenkt werden kann.

Darüber hinaus weist der Halte- und Steuergriff vorzugsweise eine Grifffläche auf, die gegenüber den anderen Oberflächen des Halte- und Steuergriffs höhere Reibwerte und/oder Elastizitätswerte aufweist, so dass ein besonders gutes Fassen des Griffs möglich ist. Bei einem Kunststoff-Halte- und Steuergriff kann dies insbesondere dadurch erreicht werden, dass ein gummiartiger Kunststoff bzw. ein Elastomer im Bereich der Grifffläche aufgespritzt oder bei der Herstellung des Halte- und Steuergriffs durch Co-Extrusion, durch Zwei-Komponenten-Spritzguss oder in ähnlicher Weise vorgesehen wird. Insbesondere ist auch Aufkleben oder allgemein formschlüssiges oder stoffschlüssiges Aufbringen, z.B. auch Aufclipsen oder Verschweißen möglich.

Zum besseren Greifen kann insbesondere auch eine verstellbare Griffschlaufe vorgesehen sein, die die Hand zusätzlich abstützen kann.

Außerdem kann eine Schutzabdeckung an der Seite in Richtung der Sitzfläche vorgesehen sein, um beispielsweise durch eine gepolsterte Abdeckung die Verletzungsgefahr am Halte- und Steuergriff weiter zu reduzieren.

Ferner kann der Halte- und Steuergriff Anlagefläche für die benachbarten Oberschenkel aufweisen, um so eine angenehme Sitzposition zu ermöglichen.

Nach einem weiteren Aspekt der vorliegenden Erfindung, für welchen ebenfalls unabhängig und in Kombination mit den übrigen Aspekten Schutz begehrt wird, ist insbesondere im Bereich des Hecks des Sportgeräts mindestens ein Bremselement vorgesehen.

Das Bremselement kann wenigstens eine Bremskante und/oder Bremsklaue umfassen, die zum Bremsen mit der Gleitoberfläche in Eingriff bringbar ist.

Die Bremskante und/oder Bremsklaue können insbesondere einstückig mit dem Grundkörper ausgebildet sein.

Die Bremskante und/oder Bremsklaue können jedoch auch separat vom Grundkörper hergestellt und mittels eines Befestigungsmittels am Grundkörper befestigt sein.

Insbesondere ist das Bremselement durch eine Drehung des Grundkörpers um eine Drehachse mit der Gleitoberfläche in Eingriff bringbar.

Die Drehachse kann in einer bevorzugten Ausführungsform als Drehkante ausgebildet sein, die an der Gleitfläche des Grundkörpers angeordnet ist.

Das Bremselement kann auch als Metallstreifen oder Metallprofil ausgebildet sein, welches im Bereich des Hecks entlang des Randes insbesondere nach unten vorstehend angeordnet ist oder auswechselbar angeordnet werden kann.

Zur Erhöhung der Bremswirkung können zudem nach unten vorstehende Zacken vorgesehen sein, so dass bei Kontakt des Bremselements mit dem Fahrbahnuntergrund eine erhöhte Bremswirkung aufgebracht wird.

Vorzugsweise kann das Bremselement mit einem seiner Teile den Abschluss des Gleitbodens oder der Lauffläche bilden, um dadurch dem Verschleiß in diesem Bereich entgegenzuwirken, insbesondere wenn ansonsten der Grundkörper aus einem Kunststoffhohlkörper gebildet ist.

Vorzugsweise ist das Heck bzw. der Gleitboden und/oder eine austauschbare Lauffläche im Bereich des Bremselements nach oben gezogen, so dass der Gleitboden oder die Lauffläche in normaler Fahrposition nicht in Kontakt mit dem fahrbaren Untergrund ist. Erst durch Verlagerung des Gewichts des Fahrers nach hinten in Richtung des Hecks gelangt der Bereich des Gleitbodens oder der Lauffläche in Kontakt mit der fahrbaren Untergrund, wobei dann das Bremselement, beispielsweise mit nach unten vorstehenden Zacken, in Kontakt mit dem fahrbaren Untergrund gelangt und so zur Bremswirkung beiträgt.

Nach einem weiteren Aspekt der vorliegenden Erfindung, für welchen unabhängig und in Kombination mit den anderen Aspekten der Erfindung Schutz begehrt wird, ist im Bereich der Sitzfläche ein die Erschütterungen der Fahrt dämpfendes Sitzelement anbringbar oder fest angeordnet. Ferner kann auch in den übrigen Bereichen ein dämpfendes Schutzelement vorgesehen werden. Das Sitz- oder Schutzelement ist vorzugsweise aus einem elastisch verformbaren und/oder wärmeisolierenden Körper, insbesondere Vollkörper gebildet und/oder weist einen Gasaufnahmeraum auf, der beispielsweise mit Luft vollgepumpt werden kann. Darüber hinaus kann auch ein Gelkissen vorgesehen sein. Damit kann einerseits eine Dämpfung der Erschütterungen während der Fahrt und/oder andererseits eine Vermeidung eines zu starken Wärmeabtransports über die Sitzfläche bewirkt werden.

Bei einem aufblasbaren Sitzelement ist es vorteilhaft, wenn dieses mindestens ein Ventil zum selbstständigen Aufblasen und/oder Einstellen eines bestimmten Gasdrucks umfasst, so dass einerseits wiederum ein platzsparender Transport ermöglicht wird und andererseits die gewünschte Dämpfung des Sitzelements durch Variation des Gasdrucks eingestellt werden kann. Letzteres ist insbesondere auch für das Fahr- und Führungsverhalten des Sportgeräts von entscheidender Bedeutung, so dass dadurch auch eine Anpassung der Fahreigenschaften für bestimmte Verhältnisse möglich ist.

Nach einem weiteren Aspekt der vorliegenden Erfindung, für den wiederum unabhängig und in Kombination mit den anderen Aspekten Schutz begehrt wird, sind an der Front, dem Heck und/oder an den Seiten Ösen, Schlaufen, Bügel, insbesondere Metallbügel und/oder Zugseile, insbesondere automatisch aufrollbare Zugseile angeordnet oder abnehmbar anbringbar, um den Transport zu vereinfachen. So dienen beispielsweise die seitlichen Ösen oder Schlaufen dazu das Sportgerät an einem Rucksack zu befestigen, während die Öse an der Frontseite zum Befestigen eines Zugseils oder zum Einhängen eines Schleppbügels eines Schlepplifts dienen kann.

Nach einem weiteren Aspekt, für den ebenfalls unabhängig oder in Kombination mit den anderen Aspekten der vorliegenden Erfindung Schutz begehrt wird, sind mindestens zwei metallische Führungskufen an dem Gleitboden oder einer auswechselbar anbringbaren Lauffläche vorgesehen. Diese dienen der Verbesserung der Fahrstabilität.

Vorzugsweise sind die Führungskufen in nutartigen, an der Frontseite offenen Aussparungen vorgesehen, wobei sie durch einfaches Einschieben in diese Aussparungen eingebracht bzw. wieder entfernt werden können.

Ferner ist es vorteilhaft, wenn der Gleitboden oder eine lösbar befestigte Lauffläche an den Längsseiten metallische Führungskufen als Seitenkanten aufweist, welche einerseits bei entsprechenden Kurvenfahrten den Verschleiß am Gleitboden oder der Lauffläche verringern und andererseits ebenfalls die Fahrstabilität verbessern.

Nach einem weiteren Aspekt der vorliegenden Erfindung, für den wiederum unabhängig oder in Kombination mit anderen Aspekten der Erfindung Schutz begehrt wird, weist der Gleitboden oder eine lösbar anbringbare Lauffläche zumindest teilweise eine Oberfläche auf, die ein Gemisch aus Propylen und Ethylen oder daraus abgeleiteten Polymeren umfasst. Eine derartige Materialmischung bietet besonders gute Gleiteigenschaften auf Schnee und Eis. Insbesondere kann hier eine Mischung aus Co-Polymeren aus Propylen und Ethylen, welche auch andere Olefine aufweisen können, eingesetzt werden.

Nach einem weiteren Aspekt der vorliegenden Erfindung, für den wiederum unabhängig oder in Kombination mit anderen Aspekten der Erfindung Schutz begehrt wird, ist der gesamte Grundkörper insbesondere inklusive Gleitboden aus einem Gemisch aus Propylen und Ethylen oder daraus abgeleiteten Polymeren gebildet. Insbesondere kann der Grundkörper mit dem Gleitboden und einer Lauffläche einstückig ausgebildet sein und vorzugsweise durch Spritzguss aus einem entsprechenden Kunststoffgranulat hergestellt sein. Weitere Komponenten können ebenfalls einstückig mit dem Grundkörper aus dem entsprechenden Kunststoff insbesondere durch Spritzguss gebildet sein.

Erfindungsgemäß weist der entsprechende Kunststoff ein spezielles Gemisch aus zwei Copolymeren auf, die im folgenden als Copolymer (I) und als Copolymer (II) bezeichnet werden.

Copolymer (I) ist ein Copolymer aus Propylen und zumindest einem weiteren Olefin, das zumindest zu 50%o aus Gerüstbausteinen besteht, die von Propylenmonomeren stammen, bezogen auf die Gesamtzahl der Gerüstbausteine. In der Regel machen diese Gerüstbausteine aber nicht mehr als 99% des Copolymers aus, bezogen auf die Gesamtzahl der Gerüstbausteine. Bevorzugt besteht das Copolymer (I) aus 70 bis 99%, stärker bevorzugt aus 75 bis 98%, insbesondere aus 80 bis 95%, beispielsweise aus circa 90%o aus Gerüstbausteinen, die von Propylenmonomeren herrühren (jeweils bezogen auf die Gesamtzahl der Gerüstbausteine). Das Copolymer (I) enthält darüber hinaus noch Gerüstbausteine, die von zumindest einem weiteren Olefin herstammen, bevorzugt von Ethylen. Der Anteil des weiteren Olefins oder der weiteren Olefine macht den Rest des Copolymers (I) aus, und zwar zu 100% der Gerüstbausteine, so dass es sich bei dem Copolymer (I) bevorzugt um ein Propylen-/Ethylencopolymer handelt, dessen Gehalt an Gerüstbausteinen aus Propylen wie vorstehend definiert ist und bei dem die von Ethylen stammenden Gerüstbausteine jeweils den Rest des Copolymers ausmachen. Statt eines reinen Propylen-/Ethylencopolymers kann bevorzugt auch ein Ethylen-/Propylen-Dien-terpolymer (EPDM) verwendet werden, das neben Propylen und Ethylen auch noch Diene wie Cyclooctadien, Dicyclopentadien und/oder Hexadien enthalten kann. Es ist ebenfalls möglich, daß höhere Olefine oder Diene in dem Copolymer vorhanden sind. Auch in diesem Fall ist der Anteil an Gerüstbausteinen in dem Copolymer (I), die von Propylen herstammen, wie vorstehend beschrieben, während die von Ethylen oder anderen Olefinen und dem oder den Dienen herstammenden Gerüstbausteine des Copolymers den Rest ausmachen. Die bevorzugten Copolymere (I) sind kommerziell erhältlich, beispielsweise von der Firma Exxon Mobil unter der Bezeichnung PP 7011 L1.

Das Copolymer (I) macht vorzugsweise 10 bis 99 Gew.-%, insbesondere 10 bis 90 Gew.%, höchst vorzugsweise 50 bis 90 Gew.%, z.B. 50 bis 80 Gew.-% oder 60 bis 80 Gew.%, z.B. circa 80 Gew.-% oder ca. 70 Gew.-%, des Gemischs der Copolymere (I) und (II) aus.

Der zweite wesentliche Bestandteil in dem Copolymerengemisch ist das Copolymer (II), bei dem es sich um ein Copolymer aus Ethylen und zumindest einem weiteren Olefin handelt, das mindestens 50% Gerüstbausteine enthält, die von Ethylen herstammen (bezogen auf die Gesamtzahl der Gerüstbausteine). Das Copolymer (II) enthält in der Regel nicht mehr als 99% Gerüstbausteine, die von Ethylen herstammen, und insbesondere weist es 70 bis 99% von Ethylen herstammende Gerüstbausteine auf, stärker bevorzugt 75 bis 98%, insbesondere von 80 bis 95%, beispielsweise circa 90%, jeweils bezogen auf die Gesamtzahl der Gerüstbausteine. Das Copolymer (II) enthält darüber hinaus auch Gerüstbausteine, die von zumindest einem weiteren Olefin herstammen, bevorzugt von einem Olefin mit 4 bis 10 Kohlenstoffatomen, insbesondere von 6 bis 10 Kohlenstoffatomen, am stärksten bevorzugt von Octen.

Ferner kann das Copolymer (II) noch Bausteine enthalten, die von einem Dien oder mehreren Dienen herstammen, wie sie aus den EPDM Kautschuken bekannt. sind. Auf jeden Fall ist im Copolymer (II) der Anteil von Bausteinen, die von Ethylen herrühren derart, wie vorher angegeben, während die übrigen von weiteren Olefinen oder Dienen herstammenden Bausteine den Rest des Copolymers (II) ausmachen. Die einsetzbaren Copolymere (II) sind kommerziell erhältlich, beispielsweise von der Firma Dexplastomer unter der Bezeichnung Exact 0203 bzw. Exact Octene-1 Plastomer.

Das Copolymer (II) macht bevorzugt 1 bis 90 Gew.%, stärker bevorzugt 10 bis 90 Gew.%, insbesondere 10 bis 50 Gew.%, z.B. 20 bis 50 Gew.-% oder 20 bis 40 Gew.-%, beispielsweise etwa 20 Gew.-% oder etwa 30 Gew. fl/o des Gemischs der Copolymere (I) und (II) aus.

Bevorzugt handelt es sich sowohl beim Copolymer (I) als auch beim Copolymer (II) um "Random"-Copolymere. Der Begriff "Copolymere", wie er hier verwendet wird, umfasst nicht nur Copolymere aus zwei Monomereinheiten, sondern auch Copolymere, die aus mehr als zwei verschiedenen Monomereinheiten, insbesondere aus drei verschiedenen Monomereinheiten oder aus vier verschiedenen Monomereinheiten, aufgebaut sind. Der Begriff "Copolymere", wie er hier verwendet wird, umfasst damit insbesondere auch Terpolymere. Der Begriff "Olefin", wie er hier verwendet wird, schließt Verbindungen mit einer oder mehreren Doppelbindungen, vorzugsweise mit einer oder zwei Doppelbindungen (Diene), ein, die bevorzugt nicht mehr als 16, stärker bevorzugt nicht mehr als 10 Kohlenstoffatome enthalten und die verzweigt oder unverzeigt sein können.

Vorteilhafterweise enthält das Copolymergemisch zur Herstellung der Gleitfläche oder des gesamten Grundkörpers mit Gleitboden und/oder Lauffläche noch ein an sich bekanntes, für Polypropylene geeignetes Gleitmittel. Sofern das Gleitmittel vorhanden ist, ist es bevorzugt in einer Menge von 0,1 bis 30 Gew.-% oder von 5 bis 30 Gew.%, stärker bevorzugt in einer Menge von 0,5 bis 10 Gew.-% oder von 1 bis 70 Gew.%, z.B. in einer Menge von etwa 1 Gew.-% oder von etwa 3 Gew.%, bezogen auf das Gesamtgewicht des Gemischs aus Copolymer (I) und Copolymer (II), vorhanden. Besonders bevorzugt handelt es sich bei dem Gleitmittel um ein übliches hydrophobes Gleitmittel z.B. auf der Basis von hochtemperaturstabilen Primär- oder Sekundärfettsäuren, wie Primärfettsäureaminen, oder um Carbonsäureester. Besonders bevorzugt ist auch ein Gemisch aus einem Gleitmittel auf Basis von hochtemperaturstabilen Primärfettsäuren mit einem oder mehreren Carbonsäureestern. Übliche Handelsprodukte sind die Produkte Hecoslip 103 PO und Hecoslip 114 PP der Hecoplast GmbH (Iserlohn, Deutschland). Besonders bevorzugt wird ein Gemisch aus einer hochtemperaturstabilen Primärfettsäure und einem Carbonsäureester in einem Verhältnis von etwa 1:2 eingesetzt.

Weiterhin können die Copolymergemische zur Herstellung der erfindungsgemäßen Gleitbeläge noch übliche Antistatika enthalten, insbesondere die für Polypropylen bekannten Antistatikadditive wie Carbonsäureester. Derartige Antistatika, falls sie vorhanden sind, sind bevorzugt in einer Menge von 0,1 bis 30 Gew.% oder 5 bis 30 Gew.%, stärker bevorzugt von 0,5 bis 10 Gew: %, beispielsweise in einer Menge von etwa 1 Gew.%, bezogen auf das Gesamtgewicht des Gemischs aus Copolymer (I) und Copolymer (II), vorhanden.

Des Weiteren können die Copolymergemische zur Herstellung des Kunststoffgranulats noch übliche Nukleierungsmittel beinhalten, insbesondere für Polypropylen gebräuchliche Nukleierungsmittel. Nukleierungsmittel sind Keimbildner, wie Natriumbenzoat, die erstmals in den 60er Jahren vorgestellt wurden und die z.B. von der Firma Henkel KGaA (Düsseldorf, Deutschland) oder der Hecoplast GmbH (Iserlohn, Deutschland) erhältlich sind. Bevorzugt sind erfindungsgemäß organische Nukleierungsmittel wie Nukleierungsmittel auf Zuckerbasis, wie Sorbitolacetale. Ein bevorzugtes Handelsprodukt ist das Produkt Heconuk 484PP der Firma Hecoplast. Derartige Nukleierungsmittel, falls sie vorhanden sind, sind bevorzugt in einer Menge von 0,1 bis 30 Gew.-%, stärker bevorzugt von 0,5 bis 10 Gew.%, beispielsweise in einer Menge von etwa 2 Gew.-°!o, bezogen auf das Gewicht des Copolymers (I) vorhanden.

Vorzugsweise enthalten die Copolymergemische zur Herstellung des Sportgeräts bzw. des Kunststoffgranulats sowohl zumindest ein Nukleierungsmittel wie vorstehend definiert und zumindest ein Gleitmittel wie vorstehend definiert, jeweils in den vorstehend angegebenen bevorzugten Mengen. Bevorzugt ist auch, dass das Gleitmittel teils oder ganz an das Nukleierungsmittel gebunden ist. Falls ein Nukleierungsmittel vorhanden ist, wird als Gleitmittel bevorzugt Primärfettsäuren und/oder Sekundärfettsäuren eingesetzt, bevorzugt mit einem Anteil von 1 bis 90 Gew. % bezogen auf das Gesamtgewicht des Nukleierungsmittels, stärker bevorzugt mit einem Anteil von 1 bis 10 Gew. % bezogen auf das Gesamtgewicht des Nukleierungsmittels, insbesondere mit einem Anteil von etwa 7 Gew. % bezogen auf das Gesamtgewicht des Nukleierungsmittels.

In der bevorzugten Ausführungsform, in der das bevorzugte Copolymergemisch sowohl ein Nukleierungsmittel als auch ein Gleitmittel enthält, das gegebenenfalls oder (bevorzugt) teilweise an das Nukleierunosmittel gebunden ist, wird als Gleitmittel besonders bevorzugt ein Gemisch aus einer hochtemperaturstabilen Primärfettsäure und einem Carbonsäureester in einem Verhältnis von 1:10 eingesetzt.

Auch weitere übliche Zusatzstoffe können in dem Copolymergemisch zur Herstellung des Sportgeräts vorhanden sein, wie Zusatzstoffe zur Verbesserung der hydrophoben und antistatischen Eigenschaften oder der Witterungsbeständigkeit und der Kratzfestigkeit, wobei insbesondere Siliziumverbindungen, insbesondere anorganische Siliziumverbindungen wie Siliziumdioxid, Maleinsäureanhydrid, Ruß und Fluor bzw. fluorierte Kohlenwasserstoffe genannt werden können. Gegebenenfalls sind ebenfalls Pigmente wie TiOZ vorhanden. Die geeignetsten Mengen derartiger Zusatzstoffe können leicht durch Routineversuche bestimmtwerden, und jederZusatzstoff, der vorhanden ist, ist bevorzugt in einer Menge von 0,05 bis 3 Gew.-%, stärker bevorzugt von 0,1 bis 2 Gew.-%, vorhanden. Besonders bevorzugt sind erfindungsgemäße Copolymergemische, die ein Gleitmittel, ein Nukleierungsmitiel, eine Siliziumverbindung und Maleinsäureanhydrid enthalten. Ferner können Spezialimprägnierungen aufgebracht werden, die vorzugsweise an Polypropylen anbinden können und die kurzfristig die hydrophoben und antistatischen Eigenschaften verbessern und die die Oberflächenhärte zusätzlich verstärken. Hier kann ein Gemisch aus fluoriertem Isopropanol und Wasser genannt werden.

Der Werkstoff zeichnet sich durch eine ausgezeichnete Kerbschlagzähigkeit und Festigkeit aus.

Es ist auch vorteilhaft, auf dem Gleitbelag eine Oberflächenstruktur aufzubringen, welche eine möglichst geringe Benetzbarkeit hervorruft. Ein weiterer Vorteil ergibt sich dabei dadurch, dass Polypropylen einen so genannten "Memoryeffekt" aufweist, der auftritt, wenn man die Oberflächenstruktur noch unterhalb der molekularen Einfriergrenze aufbringt. Durch den Memoryeffekt stellt sich die Oberflächenstruktur von selbst wieder her, falls sie durch mechanische Einwirkungen gering beschädigt wurde.

Die Oberflächenstruktur wird insbesondere auf dem Gleitboden oder der Gleitfläche auf gleiche Art und Weise angebracht, wie dies bei Skiern bekannt ist, beispielsweise durch die Verwendung von strukturierten Glättwalzen. Wie vorstehend erwähnt, ist es bevorzugt, dass die Oberflächenstruktur vor dem molekularen Einfrierpunkt auf den Gleitbelag aufgebracht wird.

Der Werkstoff kann einer Oberflächenbehandlung wie z.B. einer Coronabehandlung, Flammbehandlung, Primerbehandlung oder Ozondusche unterworfen werden.

Zusätzlich ist es vorteilhaft in dem Oberflächenmaterial des Gleitbodens oder der Lauffläche weitere Additive und Zusätze vorzusehen, die ebenfalls die Gleiteigenschaften verbessern können.

Letzteres wird auch durch das Einbringen von Topographiestrukturen, insbesondere im Nanometerbereich in die Oberfläche des Gleitbodens oder die Lauffläche bewirkt, wie bereits vorstehend ausgeführt.

Nach einem weiteren Aspekt, für den unabhängig oder in Kombination mit anderen Aspekten Schutz begehrt wird, weist der Gleitboden oder die Lauffläche und/oder dort vorgesehene Kufen konkav oder konvex gebogene Längsseiten auf, so dass die Steuerung des Sportgeräts entsprechend beeinflusst wird.

Nach noch einem weiteren Aspekt der vorliegenden Erfindung, für den wiederum unabhängig oder in Kombination mit anderen Aspekten Schutz begehrt wird, ist eine mit der Sitzfläche oder dem Halte- und Steuergriff kombinierbare Halte- und/oder Fahrbremse anbringbar oder angeordnet, welche vorzugsweise im Bremszustand vorgespannt ist und zur Lösung der Bremswirkung gegen die Vorspannkraft betätigt werden muss.

Beispielsweise kann hierfür ein entsprechender Druckhebel oder Knopf am Griff oder an der Sitzfläche vorgesehen sein, mit welchem die Bremse bei Druckbetätigung gelöst werden kann, wobei dann, wenn der Nutzer das Sportgerät verlässt oder abstellt durch die automatische Vorspannkraft eine Bremswirkung gegeben ist.

Nach einem weiteren Aspekt für den unabhängig oder in Kombination mit anderen Aspekten Schutz begehrt wird, weist der Gleitboden eine in dem Gleitboden vorgesehene oder anbringbare Rollvorrichtung auf, mit der es möglich ist auf nicht oder schlecht gleitfähigem Grund eine Fahrmöglichkeit zu schaffen. Die Rollvorrichtung kann alternativ auch an einer anbringbaren Lauffläche vorgesehen sein.

Insbesondere ist es vorteilhaft, wenn die Rollvorrichtung im Grundkörper und/oder einer anbringbaren Lauffläche versenkbar ist, um zwischen den beiden Fahrmöglichkeiten, einerseits Rollen und andererseits Gleiten wählen zu können.

Die Rollvorrichtung kann mehrere Reifen, Räder, Rollen oder dergleichen umfassen, insbesondere mindestens drei, vorzugsweise vier oder mehr Räder, Rollen oder dergleichen. Diese Reifen, Räder, Rollen oder dergleichen können einzeln oder in einer Baugruppe angeordnet und somit auch versenkbar sein.

Nach einem weiteren Aspekt, für den unabhängig oder in Kombination mit anderen Aspekten Schutz begehrt wird, zeichnet sich die vorliegende Erfindung dadurch aus, dass der Grundkörper und insbesondere das gesamte Sportgerät schwimmfähig ausgebildet sind, so dass beispielsweise auch eine Anwendung auf dem Wasser, insbesondere in Verbindung mit einer Zugvorrichtung, wie fest installierten Wasserski-Zugvorrichtungen oder Sportbooten und dergleichen möglich ist.

Nach einem weiteren Aspekt, für den unabhängig oder in Kombination mit anderen Aspekten Schutz begehrt wird, ist der Grundkörper als aufblasbarer und insbesondere wiederholt aufblasbarer Grundkörper ausgestaltet, so dass eine besonders platzsparende Lagerung und Transport möglich ist, wenn der Grundkörper entleert ist.

Vorzugsweise können an dem Grundkörper Versteifungselemente, wie Versteifungsrippen oder dergleichen vorgesehen sein, um dem Grundkörper eine ausreichende Stabilität zu verleihen.

Nach noch einem weiteren Aspekt der vorliegenden Erfindung, für den wiederum unabhängig oder in Kombination mit anderen Aspekten Schutz begehrt wird, ist das Sportgerät, insbesondere der Grundkörper, die Sitzfläche und/oder die gesamte Oberseite oder Teile der Oberseite des Grundkörpers in verschiedenen Dimensionen gestaltet, so dass auf die Körpergröße des Nutzers abgestellt ist. Insbesondere für Kinder, Jugendliche und Erwachsene können so unterschiedliche Sportgeräte bereitgestellt werden, die für die jeweilige Zielgruppe optimale Handhabungseigenschaften aufweisen. Insbesondere können die Dimensionen, Festigkeit, Steifigkeit und dergleichen auf Kinder, Jugendliche, Erwachsene oder auch Frauen und/oder Männer abgestellt werden.

Der Grundkörper, der vorzugsweise ein Kunststoffhohlkörper ist, kann insbesondere im Extrusionsblasverfahren, im Rotationsgussverfahren oder im Spritzgießverfahren, insbesondere gemäß der Schalentechnik hergestellt werden.

### KURZBESCHREIBUNG DER FIGUREN

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Die Figuren zeigen hierbei in rein schematischer Weise in
- Fig. 1: eine perspektivische Ansicht eines erfindungsgemäßen Sportgeräts mit teilweise abgebauten Komponenten;
- Fig. 2: eine teilweise Seitenansicht des Sportgeräts aus Fig. 1;
- Fig. 3: eine Seitenansicht einer weiteren Ausführungsform des Sportgeräts von hinten;
- Fig. 4: eine Bodenansicht einer dritten Ausführungsform des erfindungsgemäßen Sportgeräts;
- Fig. 5: eine Bodenansicht eines vierten Ausführungsbeispiels;
- Fig. 6: die Bodenansicht eines fünften und sechsten Ausführungsbeispiels der Erfindung;
- Fig. 7: eine Seitenansicht eines mit einem Passagier besetzten Sportgeräts;
- Fig. 8a, 8b: den Heckbereich zweier Ausführungsformen des Sportgeräts in einer Seitenansicht.

### BEVORZUGTE AUSFÜHRUNGSFORMEN

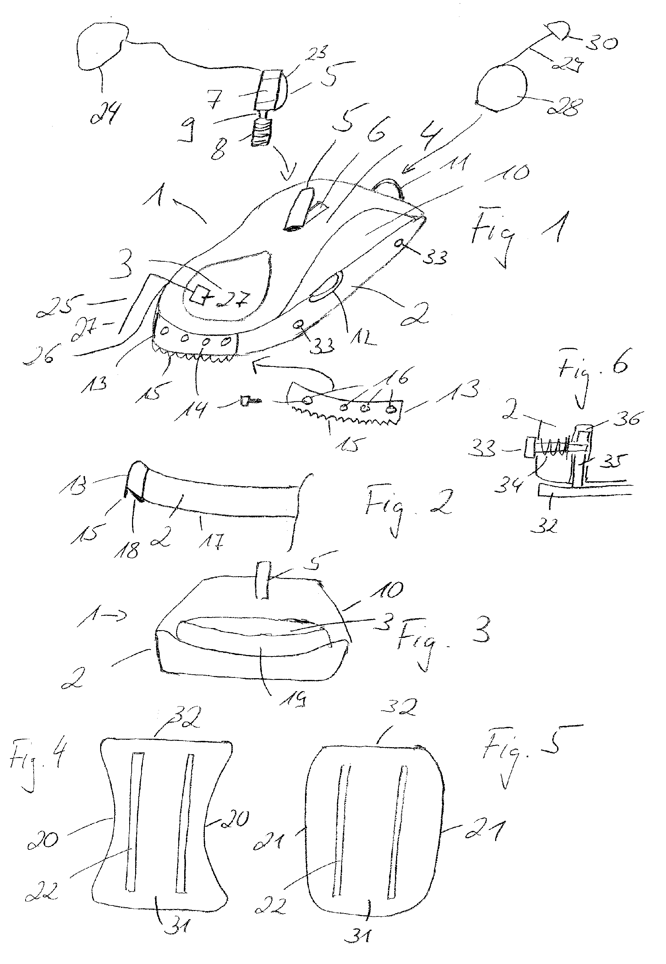

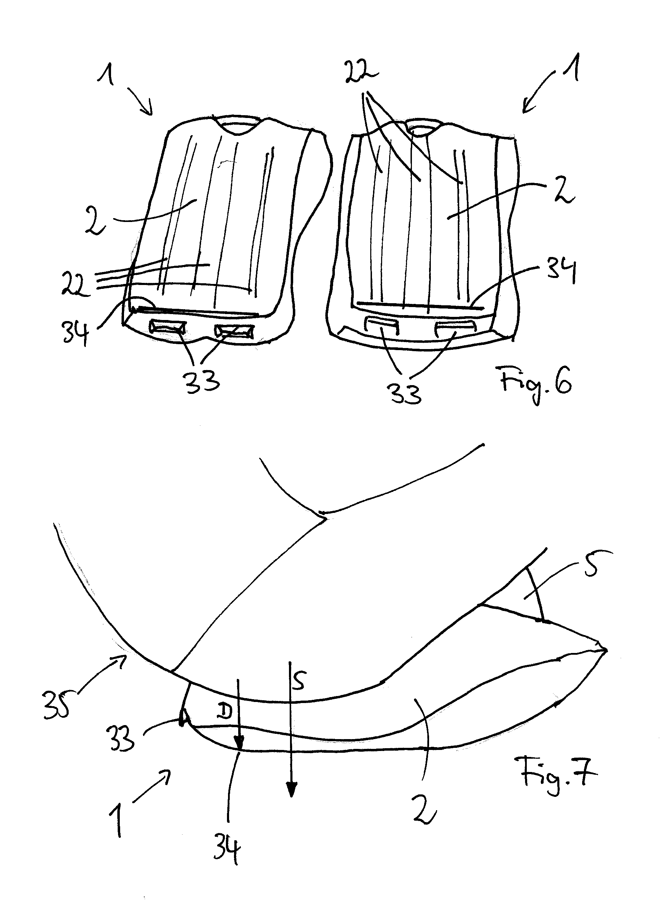

Die Figur 1 zeigt ein erfindungsgemäßes Sportgerät mit einem Grundkörper 1, der als Kunststoff-Hohlkörper ausgebildet ist. Der Kunststoff-Hohlkörper weist einen Gleitboden 2 auf, der, wie insbesondere in Figur 3 gut zu erkennen ist, nach oben in seitlich nach innen geneigte Seitenflächen 10 übergeht.

An der Oberseite des Grundkörpers 1 ist einen Sitzfläche 3 in Form einer Mulde sowie eine Beinauflagefläche 4 vorgesehen, die sich unmittelbar an die Sitzfläche 3 anschließt und im kontinuierlichen Verlauf in eine Erhebung übergeht, um anschließend zur Frontseite des Sportgeräts zum Gleitboden 2 abzufallen.

In der Beinauflagefläche 4 ist eine Halte- und Steuergriff 5 vorgesehen, der im Fahrzustand aus der Beinauflagefläche 4 nahezu senkrecht bzw. in einem Winkel größer 30° zur Beinauflagefläche von dieser hervorsteht.

Der Nutzer setzt sich so auf die Sitzfläche 3, dass der Halte- und Steuergriff 5 zwischen seinen Beinen im Bereich der Oberschenkel zu liegen kommt. Die Beine sind dabei so auf der Beinauflagefläche 4 abgestützt, dass der Nutzer bzw. Fahrer die nach vorne überstehenden Füße leicht anheben kann, um während der Fahrt den Boden nicht zu berühren.

Bei dem gezeigten Ausführungsbeispiel der Figur 1 ist der Griff 5 klappbar ausgebildet, so dass er in der Aussparung bzw. Vertiefung 6 der Beinauflagefläche 4 aufgenommen werden kann. Entsprechend ist im Bereich der Beinauflagefläche 4 ein Drehgelenk 5 (nicht gezeigt) an dem Halte- und Steuergriff 5 vorgesehen, welches in der Weise feststellbar ist, dass die aufrechte Fahrstellung arretierbar ist. In gleicher Weise kann auch die abgeklappte Stellung in der Vertiefung 6 arretierbar sein.

Wie eine separate Darstellung des Griffs 5 in Figur 1 zeigt, kann der Griff 5 zusätzlich oder alternativ lösbar in dem Grundkörper 1 aufgenommen sein und zwar über ein Gewinde 8, welches an dem Griff 5 angeformt ist. Dieses kann beispielsweise bei der Ausbildung des Griffs 5 aus Kunststoff und insbesondere aus einem Kunststoff-Hohlkörper bereits beim Spritz- bzw. Blasvorgang integral ausgebildet werden. Alternativ kann auch ein Metallgewinde, ein sog. Gewindestutzen in den Griff 5 mit eingegossen werden. Auch andere Herstellungsmethoden sind denkbar.

Entsprechend ist in dem Grundkörper 1 des Sportgeräts eine Gewindebuchse (nicht gezeigt) ausgebildet, in die der Griff 5 mit dem Gewindestutzen 8 eingeschraubt werden kann.

Bei der Ausführungsform des Halte- und Steuergriffs 5, welche in dem Grundkörper 1 lösbar aufgenommen ist, kann auch eine Sollbruchstelle 9 vorgesehen sein, die dazu dient, dass bei einer zu starken Belastung, beispielsweise bei einem Unfall mit dem Sportgerät, der durch sein Hervorstehen aus der Beinauflagefläche 4 möglicherweise zu Verletzungen beitragende Halte- und Steuergriff 5 bei Überschreiten einer Maximalbelastung an der Sollbruchstelle 9 abbricht, um so Verletzungen vorzubeugen. Alternativ kann dies beispielsweise auch bei einem klappbaren Halte- und Steuergriff mit einem Drehgelenk (nicht gezeigt) erreicht werden, bei welchem die entsprechende Verrastung des Drehgelenks bei Überlast überwunden werden kann.

Durch ein lösbares Anbringen des Halte- und Steuergriffs 5 an dem Grundkörper 1 ist ein schneller Austausch des Halte- und Steuergriffs 5 möglich, was dazu führt, das einerseits das Sportgerät leichter verstaut und transportier werden kann und andererseits auch verschiedene Griffe 5 eingesetzt werden können. Beispielsweise kann durch die Größe des Griffs 5 Einfluss auf die Steuerbarkeit des Sportgeräts bzw. dessen Steuerungsempfindlichkeit genommen werden.

In Figur 1 ist darüber hinaus gezeigt, dass der Halte- und Steuergriff 5 eine Grifffläche 7 aufweisen kann, die beispielsweise erhöhte Reibwerte gegenüber den übrigen Flächen des Halte- und Steuergriffs 5 aufweist, um eine ausreichende Haltefähigkeit für den Nutzer zu gewährleisten. Darüber hinaus kann die Grifffläche 7 auch besonders elastische Eigenschaften aufweisen, wie beispielsweise eine gummierte Oberfläche, so dass sich insgesamt das Gefühl eines angenehmen und weichen Griffs, eines sog. Soft-Touch-Griffs, ergibt.

Ferner können an dem Griff 5 eine Haltelasche 23 und eine Sicherungsleine 24 angebracht werden, wobei letztere beispielsweise an einen Arm befestigt werden kann, um beispielsweise bei einem Unfall, bei dem der Fahrer von der Sitzfläche 3 fällt, das Sportgerät nicht zu verlieren, sondern an seinem Arm durch die Sicherungsleine 24 gefangen zu halten.

Diesem Zweck dient auch eine Haltebremse 25, die schematisch im Zusammenwirken mit der Sitzfläche 3 dargestellt ist. Die Haltebremse 25 weist eine Betätigungsfläche 27 auf, die so angeordnet ist, dass der Bremshebel 27 in einer Bremsstellung ist, wenn kein Fahrer auf der Sitzfläche 3 ist. Dazu wird die Betätigungsfläche 27 beispielsweise durch eine Federanordnung (nicht gezeigt) von der Sitzfläche 3 angehoben. Nimmt ein Fahrer auf der Sitzfläche 3 Platz, so wird die Betätigungsfläche 27 gegen die Vorspannung einer Federanordnung (nicht gezeigt) auf die Sitzfläche 3 gedrückt und der Bremshebel 27 der Haltebremse 25 wird über die Drehlagerung 26 nach oben bewegt, um aus dem Eingriff mit dem Boden gelöst zu werden, so dass keine Bremswirkung mehr vorhanden ist. Verlässt der Fahrer jedoch die Sitzfläche 3, so wird die Betätigungsfläche 27 durch die Federanordnung von der Sitzfläche 3 abgehoben und der Bremshebel 27 dreht sich um die Drehlagerung 26, so dass der Bremshebel 27 den Boden berührt und das Sportgerät abbremst bzw. anhält.

Eine weitere oder alternativ dazu vorgesehene Bremse, nämlich die Fahrbremse 13, die nach einer weiteren bevorzugten Ausgestaltung (nicht gezeigt) mit der Haltebremse 25 kombinierbar ist, ist im Heck des Sportgeräts vorgesehen. Die Fahrbremse 13, die auch separat als einzelne Komponente gezeigt ist, ist durch einen Metallstreifen gebildet, der an seinem unteren Rand Zacken 15 aufweist. In dem Metallstreifen sind Öffnungen 16 vorgesehen, durch die Schrauben 14 in Gewindebuchse (nicht gezeigt) des Gleitbodens 2 bzw. der Heckwand des Grundkörpers 1 eingeschraubt werden, so dass die Fahrbremse 13 durch die Schraubenköpfe an dem Grundkörper 1 des Sportgeräts gehalten ist. Durch die Schraubverbindungen kann die Fahrbremse 13 bei Bedarf schnell gewechselt werden. Entsprechend können unterschiedliche Fahrbremsen 13, beispielsweise mit unterschiedlichen Zackenformen je nach Untergrundbedingungen angebracht werden. Allerdings ist es auch möglich die Fahrbremse 13 integral in dem Grundkörper 1 vorzusehen, insbesondere diese bei der Herstellung des Grundkörpers mit einzugießen bzw. mit anzuformen. Neben der Anordnung der Bremse am Grundkörper 1 ist auch eine Anordnung an einer auswechselbaren Lauffläche denkbar.

Wie insbesondere in Figur 2 zu sehen ist, ist das Heck des Gleitbodens 2 bzw. des Grundkörpers 1 leicht nach oben gezogen, so dass sich ein nach oben abgerundetes Ende der Gleitfläche 17 ergibt. Damit sind die Zacken 15, die von dem Gleitboden 2 bzw. der Heckwand des Grundkörpers 1 nach unten hervorstehen im normalen Fahrzustand vom Untergrund bzw. der Fahrebene abgehoben. Erst wenn der Fahrer sich auf der Sitzfläche 3 nach hinten verlagert, wird das angehobene Heck auf die Fahrbahn gedrückt, so dass die Zacken 15 eingreifen und ihre Bremswirkung verrichten können.

Vorzugsweise ist der Metallstreifen 13 bzw. die Fahrbremse 13 durch ein Profil gebildet, welches mit einem Streifen oder einer Kante 18 an der Unterseite bzw. der Gleitfläche 17 eingelassen ist. Damit wird die Bremskante verschleißfest ausgebildet und der Kunststoff-Grundkörper 1 geschont, so dass die Lebensdauer des Sportgeräts insgesamt verlängert wird.

Bei der Ausführungsform der Figur 1 sind weiterhin an den Längsseiten Bügel 12 vorgesehen,
wobei an jeder Längsseite ein Bügel 12 angeordnet ist. Beispielsweise können diese wiederum über Schraubverbindungen in Schraubbuchsen des Grundkörpers 1, in welche Schrauben eingedreht werden können, am Grundkörper 1 lösbar befestigt sein. Alternativ ist auch eine integrale und/oder einstückige Ausbildung der Bügel oder Ösen 12 mit dem Grundkörper 1 denkbar. Die Bügel 12 dienen als Befestigungslaschen beispielsweise für das Befestigen an einem Rucksack oder als Einhängemöglichkeiten für ein Zuggeschirr. In entsprechender Weise ist auch an der Front ein Bügel 12 fest oder lösbar an dem Grundkörper 1 befestigt, um beispielsweise eine Zugleine anzubringen. In Figur 1 ist in einer separaten Darstellung eine aufgerollte Zugleine 29 mit einem Handgriff 30 und einem Gehäuse zum Aufrollen der Zugleine 29 dargestellt, welche an der Stelle des Bügels 11 an dem Grundkörper 1 angeordnet werden kann. Insbesondere bei Ausbildung der Zugleine 29 mit einer Rückstellfeder, welche die Zugleine 29 selbsttätig in dem Gehäuse 28 aufrollt, kann erreicht werden, dass das Sportgerät ruckfrei über wechselnde Untergründe gezogen werden kann und/oder dass ein einfaches Einklinken oder Anhängen an einen Schlepplift oder dergleichen möglich ist.

Die Figur 3 zeigt eine zweite Ausführungsform eines erfindungsgemäßen Sportgeräts in einer Seitenansicht von hinten. Der wesentliche Unterschied der Ausführungsform gemäß der Figur 3 gegenüber den Ausführungsformen der Figuren 1 und 2 besteht in der unterschiedlichen Ausgestaltung der Sitzfläche 3, die bei der Ausführungsform der Figur 3 als Sitzkissen 19 ausgebildet ist. Im Übrigen bezeichnen gleiche Bezugszeichen ähnliche oder identische Komponenten, so dass sich eine Beschreibung dieser Komponenten erübrigt.

Das Sitzkissen 19 kann entweder als Vollkörper aus einem dämpfenden, insbesondere elastisch verformbaren Material und/oder einem stark wärmeisolierenden Material, wie beispielsweise Styropor oder dergleichen sein. Vorzugsweise wird beispielsweise Schaumstoff eingesetzt, welcher sowohl dämpfende als auch wärmeisoliernde Eigenschaften aufweist.

Alternativ kann das Sitzkissen 19 aus einem hohlen mit Gas, insbesondere mit Luft befüllbaren Körper mit flexiblen und elastischen Wandungen ausgebildet sein, wobei die entsprechende Gas- bzw. Luftfüllung die dämpfenden und isolierenden Eigenschaften übernimmt oder dazu beiträgt.

Vorzugsweise kann bei einer derartigen Ausgestaltung des Sitzkissens 19 eine Ventilanordnung (nicht gezeigt) vorgesehen sein, die ein selbsttätiges Aufblasen des Sitzkissens und/oder die Befüllung des Sitzkissens mit Gas oder Luft mit einem bestimmten Druck oder verschiedenen Drücken ermöglicht. Auf diese Weise kann der Dämpfungsgrad des Sitzkissens, welcher auch Einfluss auf die Steuerbarkeit und Fahreigenschaft aufweist, individuell eingestellt werden.

Die Figuren 4 und 5 zeigen verschiedene Ausführungsformen austauschbarer Laufflächen von unten. Hierbei weist die Lauffläche 32 bei der Ausführungsform der Figur 4 konkave Längsseiten 20 auf, während die Ausführungsform der Figur 5 konvexe Längsseiten 21 besitzt. Durch die taillierte Kelchform der Figur 4 bzw. die nach außen gewölbten Längsseiten der Tonnenform der Figur 5 wird ein unterschiedliches Fahr- und Kurvenverhalten des erfindungsgemäßen Sportgeräts bereitgestellt. Auf Grund der Auswechselbarkeit der Laufflächen können entsprechende Formen schnell und unproblematisch an dem Sportgerät vorgesehen werden.

Die Ansichten der Laufflächen 32 in den Figuren 4 und 5 zeigen auch, dass vorzugsweise Führungskufen 22 im Gleitboden bzw. in den Laufflächen vorgesehen sind, wobei die Führungskufen wiederum entsprechend detailliert oder gewölbte Längsseiten aufweisen können. Die Kufen können entweder ebenfalls auswechselbar ausgestaltet sein oder integral mit dem Gleitboden oder den Laufflächen 32 ausgebildet sein. Insbesondere können die Kufen auch aus Metall gefertigt sein. Alternativ können die Kufen jedoch auch einstückig aus Kunststoff in dem Grundkörper 1 oder der auswechselbaren Lauffläche 32 ausgebildet sein.

Die Oberfläche 31 des Gleitbodens oder einer austauschbaren Lauffläche 32 kann, wie in den Figuren 4 und 5 vollständig, oder auch nur teilweise mit einem besonderen Belag zur Verbesserung der Gleiteigenschaften versehen sein, wobei sich hier ein Gemisch aus Propylen und Ethylen und/oder Polymeren auf Basis von Propylen und/oder Ethylen bewährt hat. Vorzugsweise kann der Rand der Lauffläche 32 und insbesondere die Seitenränder 20 bzw. 21 mit einer Metallkante bzw. mit einer Art weiteren Führungskufe versehen werden, um die Fahreigenschaften zu verbessern.

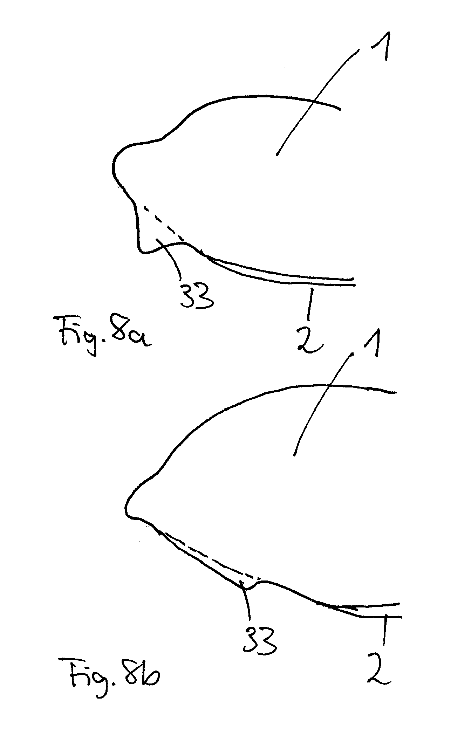

Die Figur 6 zeigt in einer detaillierten Teilansicht den Verriegelungsmechanismus für die Anbringung einer auswechselbaren Lauffläche 32, welche an der der Gleitfläche gegenüber liegenden Seite Verriegelungszapfen 35 aufweist, die in die entsprechende Bohrungen bzw. Sacklöcher des Gleitbodens 2 eingreifen können.

Quer zu den Sacklöchern 36 sind von der Seite mit einer Feder 34 vorgespannte Verriegelungsbolzen 33 vorgesehen, die entgegen der Vorspannkraft der Spiralfeder 34 aus den Sacklöchern 36 herausgezogen werden können, so dass der Verriegelungszapfen 35 der Lauffläche 32 aus dem Sackloch 36 herausgeführt werden kann. Wird der Verriegelungsbolzen 33 jedoch losgelassen, so drückt ihn die Feder 34 in das Sackloch 36 und greift dort bei eingeführtem Verriegelungszapfen in eine entsprechende Ausnehmung ein, um die Lauffläche 32 fest mit dem Gleitboden 2 bzw. dem Grundkörper 1 zu verriegeln.

Die Figur 6 zeigt jeweils eine Bodenansicht eines fünften und sechsten Ausführungsbeispiels der Erfindung.

Ein Grundkörper 1 weist jeweils eine Gleitfläche 2. Die Gleitflächen 2 sind mit integral in der Lauffläche 2 ausgebildeten Führungskufen bzw. -rillen 22 versehen. Im Heckbereich sind jeweils zwei Bremsklauen 33 angeordnet. Außerdem sind schematisch die Drehkanten 34 markiert, um die das Sportgerät nach hinten verkippt werden kann, um die Bremsklauen 33 zum Bremsen mit der Gleitoberfläche in Eingriff zu bringen. Dazu kann der Benutzer seinen Körperschwerpunkt durch das Einnehmen einer bestimmten Position und Haltung bzw. durch Gewichtsverlagerung so weit nach hinten bringen, dass ein Verkippen um die Drehkante 34 und ein entsprechender Eingriff der Bremsklauen 33 stattfindet.

Die Bremsklauen 33 am Heck des Sportgeräts können beispielsweise angeblasen werden. Die Bremsklauen 33 könnten sowohl einstückig mit dem Grundkörper ausgebildet, als auch als separates Teil gefertigt und mit beliebigen Befestigungsmitteln am Grundkörper 1 befestigt werden. Der Grundkörper 1 weist in letzterem Fall Kopplungselemente zum Ankoppeln der Bremsklauen 33 auf.

Es wurde erkannt, dass eine gute Bremswirkung ohne großen Kraftaufwand erzielt werden kann, wenn der Abstand zwischen der Drehkante und dem Schwerpunktsvektor des Benutzers in seiner bestimmungsgemäßen Fahrposition gering ist. So muss das Körpergewicht nicht stark verlagert werden, um einen Bremsvorgang einzuleiten. In der Figur 7 ist ein Sportgerät 1 mit einem Grundkörper 2 und einem Steuergriff 5 dargestellt, auf dem ein Benutzer 35 sitzt. Der Schwerpunkt des Benutzers 35 ist durch den ist durch den Vektor S gekennzeichnet. Die Drehkante 34, auch durch den Pfeil D markiert, befindet sich nahe dem Schwerpunktvektor, so dass bereits mit einer geringen Gewichtsverlagerung eine Bremswirkung erzielt werden kann. Selbstverständlich ist der Abstand zwischen dem Schwerpunktvektor S in einer bestimmungsgemäßen Fahrposition des Benutzers und dem Pfeil D, der durch die Drehkante parallel zum Vektor S verläuft, vom Hersteller des Sportgeräts 1 einstellbar, so dass eine bestimmte Bremscharakteristik vorgegeben werden kann. Bei einem geringen Abstand des Schwerpunktsvektors von der Bremskante, wie in der Figur 7 dargestellt, kann mit geringem Kraftaufwand das Sportgerät 1 auf die Bremskante gestellt bzw. die Klaue 33 mit dem Untergrund in Kontakt gebracht werden.

Die Figuren 8a und 8b zeigen jeweils den Heckbereich eines Grundkörpers 1 in einer Seitenansicht. Es sind Beispiele angeführt, wie die Klaue 33 am Heck des Grundkörpers 1 angeordnet werden kann. Die Unterseite des Grundkörpers 1 erstreckt sich dabei zum Heck hin im Wesentlichen nach oben. An dem sich nach oben erstreckenden Abschnitt ist jeweils wenigstens eine Bremskante bzw. -klaue 33 angeordnet. Diese ist bei einer Gewichtsverlagerung des Benutzers des Sportgeräts und einer daraus resultierenden Drehung um eine Drehkante mit der Gleitoberfläche in Eingriff bringbar, um eine Bremswirkung zu erzielen.

Obwohl die bevorzugten Ausführungsformen spezielle Umsetzungen der erfindungsgemäßen Ideen zeigen, ist der Schutzbereich nicht auf diese konkreten Ausführungsformen begrenzt sondern vielmehr sind Abwandlungen und Variationen gemäß den Definitionen der Patentansprüche möglich und von Schutzumfang umfasst. Insbesondere sind auch alle Kombinationen von Einzelmerkmalen der vorliegenden Erfindung auch wenn sie nicht explizit beschrieben sind, von der Offenbarung umfasst.

Die Erfindung weist folgende Merkmale auf:
1. Sportgerät zur gleitenden Bewegung auf Schnee, Eis, Wasser oder künstlichen Gleitoberflächen mit einem Grundkörper (1), welcher einen Gleitboden (2), eine dem Gleitboden gegenüber liegende Sitzfläche (3) und eine an die Sitzfläche anschließende Beinauflagefläche (4) aufweist, in welcher ein aus der Beinauflagefläche hervorstehender Halte- und Steuergriff (5) vorgesehen ist,
   wobei
   der Grundkörper Kopplungselemente zum schnellen Wechseln von Komponenten und/oder Anbauteilen aufweist.
2. Sportgerät nach Merkmal 1,
   wobei
   die Kopplungselemente Gewindebuchsen, Gewindestutzen, Klemmelemente, formschlüssige Verbindungen, insbesondere Rastverbindungen, vorzugsweise Clipsverbindungen, Klettverschlüsse und dergleichen umfassen.
3. Sportgerät nach Merkmal 1 oder 2,
   wobei
   die Kopplungselemente als einstückige integrale Teile des Grundkörpers und/oder als separate form-, kraft- oder stoffschlüssig am Grundkörper vorgesehene Ein- oder Anbauteile ausgebildet sind.
4. Sportgerät nach einem der vorhergehenden Merkmale,
   wobei
   die Kopplungselemente als in den Grundkörper eingegossene Metallteile und/oder Kunststoffteile ausgebildet sind.
5. Sportgerät nach einem der vorhergehenden Merkmale,
   wobei
   die Komponenten und/oder Anbauteile jeweils mindestens eine Bremshilfe, insbesondere eine Fahr- und/oder Haltebremse, einen Halte- und Steuergriff, ein Sitzelement, eine Tragehilfe, eine Lauffläche, eine Kufe und/oder eine Fanghilfe umfassen.
6. Sportgerät nach einem der vorhergehenden Merkmale,
   wobei
   ein in eine Gewindebuchse einschraubbarer Halte- und Steuergriff (5) vorgesehen ist.
7. Sportgerät nach einem der vorhergehenden Merkmale oder dem Oberbegriff des Merkmals 1,
   wobei
   der Halte- und Steuergriff (5) eine Sollbruchstelle (9) aufweist.
8. Sportgerät nach Merkmal 7,
   wobei
   die Sollbruchstelle (9) im Bereich der Beinauflagefläche (4) vorgesehen ist.
9. Sportgerät nach einem der vorhergehenden Merkmale oder dem Oberbegriff des Merkmals 1,
   wobei
   der Halte- und Steuergriff (5) klappbar und/oder im Grundkörper versenkbar ausgebildet ist.
10. Sportgerät nach einem der vorhergehenden Merkmale,
   wobei
   der Halte- und Steuergriff (5) eine Grifffläche (7) aufweist, die eine gegenüber der oder den übrigen Oberflächen des Halte- und Steuergriffs höhere Reibung und/oder Elastizität aufweist, wobei der der Halte- und Steuergriff insbesondere aus Kunststoff mit zwei unterschiedlichen Kunststoffen besteht, die co-extrudiert, 2-Komponenten-gespritzt, nacheinander gespritzt, aufeinander geklebt oder in sonstiger Weise miteinander verbunden worden sind.
11. Sportgerät nach einem der vorhergehenden Merkmale,
   wobei
   der Halte- und Steuergriff (5) eine insbesondere verstellbare Griffschlaufe (23) umfasst.
12. Sportgerät nach einem der vorhergehenden Merkmale,
   wobei
   der Halte- und Steuergriff eine in Richtung der Sitzfläche angeordnete Schutzabdeckung aufweist.
13. Sportgerät nach einem der vorhergehenden Merkmale,
   wobei
   der Halte- und Steuergriff Anlageflächen, insbesondere in Form von Mulden für die Oberschenkel aufweist.
14. Sportgerät nach einem der vorhergehenden Merkmale oder dem Oberbegriff des Merkmals 1,
   wobei
   im Bereich des Hecks mindestens ein Bremselement (13) vorgesehen ist.
15. Sportgerät nach Merkmal 14,
   wobei
   das Bremselement (13) als Metallstreifen, insbesondere Edelstahlstreifen, oder Metallprofil ausgebildet ist, welcher im Bereich des Hecks entlang des Randes nach unten vorstehend angeordnet oder anordenbar ist.
16. Sportgerät nach Merkmal 14 oder 15,
   wobei
   das Bremselement (13) nach unten vorstehende Zacken (15) aufweist.
17. Sportgerät nach einem der Merkmale 14 bis 16,
   wobei
   das Bremselement (13) zumindest teilweise in den Gleitboden hinein ragt und einen Teil des Gleitbodens oder der Lauffläche bildet.
18. Sportgerät nach einem der Merkmale 14 bis 17,
   wobei
   das Heck insbesondere im Bereich des Bremselements nach oben gezogen ist, wobei durch eine Gewichtsverlagerung des Fahrers nach hinten das Heck und das Bremselement in Kontakt mit dem Fahrbahnuntergrund gebracht werden kann.
19. Sportgerät nach einem der vorhergehenden Merkmale oder dem Oberbegriff des Merkmals 1,
   wobei
   ein Erschütterungen dämpfendes Sitzelement (19) und/oder Schutzelement anbringbar oder angeordnet ist.
20. Sportgerät nach Merkmal 19,
   wobei
   das Sitzelement eine elastisch verformbare und eine wärmeisolierende Masse, insbesondere Schaumstoff und/oder einen Gasaufnahmeraum und/oder ein Gelkissen umfasst.
21. Sportgerät nach Merkmal 19 oder 20,
   wobei
   das Sitzelement (19) mindestens ein Ventil zum selbsttätigen Aufblasen und/oder Einstellen eines bestimmten Gasdrucks umfasst.
22. Sportgerät nach einem der vorhergehenden Merkmale oder dem Oberbegriff des Merkmals 1,
   wobei
   an dem Grundkörper (1) Ösen (12), Schlaufen, Bügel insbesondere Metallbügel und/oder Zugseile, insbesondere automatisch aufrollbare Zugseile angeordnet oder anbringbar sind.
23. Sportgerät nach Merkmal 22,
   wobei
   an der Front, dem Heck und/oder an den Seiten Ösen, Schlaufen, Bügel, insbesondere Metallbügel und/oder Zugseile, insbesondere automatisch aufrollbare Zugseile angeordnet oder anbringbar sind.
24. Sportgerät nach einem der vorhergehenden Merkmale oder dem Oberbegriff des Merkmals 1,
   wobei
   mindestens zwei metallische Führungskufen (22) vorgesehen sind.
25. Sportgerät nach Merkmal 24,
   wobei
   die Führungskufen in nutartigen, an der Frontseite offenen Aussparungen eingeschoben sind.
26. Sportgerät nach Merkmal 24 oder 25,
   wobei
   die metallischen Führungskufen als Seitenkanten des Gleitbodens (2) oder einer Lauffläche (32) vorgesehen sind.
27. Sportgerät nach einem der vorhergehenden Merkmale oder dem Oberbegriff des Merkmals 1,
   wobei
   der Gleitboden (2) oder die Lauffläche (32) zumindest teilweise eine Oberfläche aufweist, die ein Gemisch von Propylen und Ethylen oder von daraus abgeleiteten oder diese enthaltenden Polymeren umfasst.
28. Sportgerät nach Merkmal 27,
   wobei
   die Oberfläche des Gleitbodens oder der Lauffläche weitere Olefine oder daraus abgeleitete Polymere oder diese enthaltende Polymere umfasst.
29. Sportgerät nach Merkmal 27 oder 28,
   wobei
   die Oberfläche des Gleitbodens oder der Lauffläche weitere Additive oder Zusätze umfasst.
30. Sportgerät nach einem der Merkmale 27 bis 29,
   wobei
   die Oberfläche des Gleitbodens oder der Lauffläche Topographiestrukturen, insbesondere im Nanometerbereich aufweist.
31. Sportgerät nach einem der vorhergehenden Merkmale oder dem Oberbegriff des Merkmals 1,
   wobei
   der Gleitboden (2) oder die Lauffläche (32) und/oder dort vorgesehene Kufen (22) konkav oder konvex gebogene Längsseiten aufweist.
32. Sportgerät nach einem der vorhergehenden Merkmale oder dem Oberbegriff des Merkmals 1,
   wobei
   eine insbesondere mit der Sitzfläche (3) oder dem Halte- und Steuergriff kombinierbare Halte- und/oder Fahrbremse (25) anbringbar oder angeordnet ist, welche in den Bremszustand vorgespannt ist und zur Lösung der Bremswirkung gegen die Vorspannkraft betätigt werden muss.
33. Sportgerät nach einem der vorhergehenden Merkmale oder dem Oberbegriff des Merkmals 1,
   wobei
   eine Rollvorrichtung an dem Gleitboden (2) und/oder einer anbringbaren Lauffläche anbringbar oder angeordnet ist.
34. Sportgerät nach Merkmal 33,
   wobei
   die Rollvorrichtung im Grundkörper versenkbar ist.
35. Sportgerät nach Merkmal 33 oder 34,
   wobei
   die Rollvorrichtung mehrere Reifen Räder, Rollen oder dergleichen umfasst, die einzeln oder in einer Baugruppe angeordnet sind und/oder versenkbar sind.
36. Sportgerät nach einem der vorhergehenden Merkmale oder dem Oberbegriff des Merkmals 1,
   wobei
   der Grundkörper und insbesondere das gesamte Sportgerät schwimmfähig ist.
37. Sportgerät nach einem der vorhergehenden Merkmale oder dem Oberbegriff des Merkmals 1,
   wobei
   der Grundkörper (1) reversibel aufblasbar ist.
38. Sportgerät nach einem der vorhergehenden Merkmale,
   wobei
   der Grundkörper Versteifungselemente aufweist.
39. Sportgerät nach einem der vorhergehenden Merkmale oder dem Oberbegriff des Merkmals 1,
   wobei
   der Grundkörper (1), die Sitzfläche (3) und/oder die gesamte Oberseite oder Teile der Oberseite das Grundkörpers (1) auf die Körpergröße des Nutzers, insbesondere Kinder, Jugendliche, Erwachsenen, Frauen und/oder Männer abgestimmt ist.
40. Sportgerät nach einem der vorhergehenden Merkmale,
   wobei
   der Grundkörper (1) ein Kunststoffhohlkörper ist.
41. Sportgerät nach einem der vorhergehenden Merkmale,
   wobei
   der Grundkörper im Extrusionsblasverfahren, im Rotationsgussverfahren oder im Spritzgießverfahren, insbesondere gemäß der Schalentechnik hergestellt ist.
42. Sportgerät nach einem der vorhergehenden Merkmale,
   wobei
   der Grundkörper eine im Wesentlichen rechteckformige, ovale, tonnenförmige oder kelchartige Grundfläche mit oder ohne jeweils abgerundeten Ecken aufweist.
43. Sportgerät nach einem der vorhergehenden Merkmale,
   wobei
   der Grundkörper schräg zueinander geneigte Längsseiten (10) aufweist.
44. Sportgerät nach einem der vorhergehenden Merkmale,
wobei
der Grundkörper eine wellen- oder s-förmig verlaufende Oberseite mit einer nach außen gebogenen (konvexen) Beinablagefläche und einer muldenartigen (konkaven) Sitzfläche.

## Patentansprüche

1. Sportgerät zur gleitenden Bewegung auf Schnee, Eis, Wasser oder künstlichen Gleitoberflächen mit einem Grundkörper (1), welcher einen Gleitboden (2), eine dem Gleitboden gegenüber liegende Sitzfläche (3) und eine an die Sitzfläche anschließende Beinauflagefläche (4) aufweist, in welcher ein aus der Beinauflagefläche hervorstehender Halte- und Steuergriff (5) vorgesehen ist,
**dadurch gekennzeichnet, dass**
der Grundkörper ein Gemisch von Propylen und Ethylen oder von daraus abgeleiteten oder diese enthaltenden Polymeren umfasst oder ausschließlich aus diesem gebildet ist.

2. Sportgerät nach Anspruch 1,
**dadurch gekennzeichnet, dass**
das Gemisch weitere Olefine oder daraus abgeleitete Polymere oder diese enthaltende Polymere umfasst.

3. Sportgerät nach Anspruch 1 oder 2,
**dadurch gekennzeichnet, dass**
das Gemisch weitere Additive oder Zusätze umfasst.

4. Sportgerät nach einem der Ansprüche 1 bis 3,
**dadurch gekennzeichnet, dass**
der Grundkörper, insbesondere die Oberfläche des Gleitbodens oder der Lauffläche Topographiestrukturen, insbesondere im Nanometerbereich aufweist.

5. Sportgerät nach einem der Ansprüche 1 bis 4,
**dadurch gekennzeichnet, dass**
das Sportgerät durch Spritzguss aus dem Gemisch gebildet ist, wobei das Gemisch insbesondere als Granulat vorliegt.

6. Sportgerät nach einem der Ansprüche 1 bis 5,
**dadurch gekennzeichnet, dass**
weitere Komponenten, insbesondere der Griff des Sportgeräts insbesondere einstückig aus dem Gemisch gebildet sind.

7. Sportgerät nach dem Oberbegriff des Anspruchs 1 oder nach einem der Ansprüche 1 bis 6,
**dadurch gekennzeichnet, dass**
das Sportgerät wenigstens ein Bremselement aufweist, das insbesondere im Bereich des Hecks des Sportgeräts angeordnet ist.

8. Sportgerät nach Anspruch 7,
**dadurch gekennzeichnet, dass**
das Bremselement wenigstens eine Bremskante und/oder Bremsklaue umfasst, die zum Bremsen mit der Gleitoberfläche in Eingriff bringbar ist.

9. Sportgerät nach Anspruch 7 oder 8,
**dadurch gekennzeichnet, dass**
die Bremskante und/oder Bremsklaue einstückig mit dem Grundkörper (1) ausgebildet ist.

10. Sportgerät nach einem der Ansprüche 7 bis 9,
**dadurch gekennzeichnet, dass**
die Bremskante und/oder Bremsklaue mittels eines Befestigungsmittels am Grundkörper (1) befestigt ist.

11. Sportgerät nach einem der Ansprüche 7 bis 10,
**dadurch gekennzeichnet, dass**
das Bremselement durch eine Drehung des Grundkörpers (1) um eine Drehachse mit der Gleitoberfläche in Eingriff bringbar ist.

12. Sportgerät nach Anspruch 11,
**dadurch gekennzeichnet, dass**
die Drehachse als Drehkante ausgebildet ist, die an der Gleitfläche des Grundkörpers (1) angeordnet ist.
